# EUROPEAN PATENT APPLICATION

(11) **EP 2 808 808 A2**
(43) Date of publication of application: **03.12.2014**
(21) Application number: 14168047.0
(22) Date of filing: 13.05.2014
(51) Int. Cl.: G06F 17/30, G06F 3/048

(54) **User interface for information navigation and data processing**

(30) Priority: 28.05.2013 JP 2013112038
(71) Applicant: Funai Electric Co., Ltd., Daito-shi, Osaka 574-0013 (JP)
(72) Inventor: Shimizu, Yoshiharu, Osaka, 574-0013 (JP)
(74) Representative: Manitz, Finsterwald & Partner GbR

(57) **Abstract**

A data processing apparatus includes a data storage portion, a category determination portion that determines to which of predetermined hierarchical tiers of categories each of pieces of data belongs, and a designation acceptance portion. The designation acceptance portion causes a selection acceptance screen for each of the tiers to be displayed, which includes a first object representing a group of pieces of the data in a tier currently of interest and second objects corresponding respectively to those ones of the categories which are in an immediately lower tier. Upon a predetermined narrowing-down action involving a selection of any one of the second objects being performed, the designation acceptance portion accepts a designation of one of the categories corresponding to the any one of the second objects. The second objects are disposed around the first object and each have a protruding portion protruding toward the first object.

## Description

### BACKGROUND OF THE INVENTION

### Field of the Invention

The present invention relates to a data processing apparatus that performs processing of data.

### Description of Related Art

Conventionally, there has been widely used a data processing apparatus having various processing functions for processing data. For example, an apparatus installed with a plurality of types of application software (one form of a processing function, which, in the present application, may be abbreviated as an "application") is capable of executing data processing varying depending on the types of applications.

Furthermore, which application is used to process which piece of data is decided in accordance with an action designation made by a user. Such an action designation is accepted, for example, in a manner in which, after a desired application is designated, a designation of a desired piece of data that can be processed by using the application is accepted. This manner is commonly adopted particularly in a case of an application-based apparatus (in which data is managed and operated pursuant to instructions from various applications).

Other examples of the above-mentioned manner for accepting an action designation include a manner in which a designation of a desired piece of data is accepted in advance, and a designation of a desired application among various applications capable of processing the thus designated piece of data is accepted. In a case where this manner is adopted, a user can perform a data-based action designation and not an application-based action designation.

From the viewpoint of convenience or the like, desirably, a designation of a piece of data is accepted in a manner in which consideration is given so that a user can easily designate a desired piece of data.

### SUMMARY OF THE INVENTION

In view of the above-mentioned circumstances, the present invention has as its object to provide a data processing apparatus that allows a user to easily designate a desired piece of data.

A data processing apparatus according to the present invention is a data processing apparatus having a processing function for processing data, and includes a storage portion that stores pieces of data to be processed by using the processing function, a category determination portion that determines to which of predetermined hierarchical tiers of categories each of the pieces of data belongs, and a designation acceptance portion that, every time it accepts a designation of one of the categories in each of the hierarchical tiers, which is made in descending order of hierarchy, narrows down the pieces of data to ones belonging to the one of the categories thus designated. The designation acceptance portion causes a selection acceptance screen for each of the tiers to be displayed, which includes a first object representing a group of pieces of the data in a tier currently of interest and second objects corresponding respectively to those ones of the categories which are in an immediately lower tier. Upon a predetermined narrowing-down action involving a selection of any one of the second objects being performed, the designation acceptance portion accepts a designation of one of the categories corresponding to the any one of the second objects. The second objects are disposed around the first object and are each configured to have a protruding portion protruding toward the first object. This configuration allows a user to easily designate a desired piece of data.

Furthermore, more specifically, the above-described configuration may be such that the second objects are disposed so as to make contact at the protruding portion with the first object. This configuration allows a user to more intuitionally grasp details of the selection acceptance screen.

Furthermore, more specifically, the above-described configuration may be such that upon the narrowing-down action being performed, the first object is split into a selected part including a portion being in contact with the any one of the second objects selected by the narrowing-down action and a non-selected part other than the selected part. This configuration allows a user to more intuitionally perform the narrowing-down action.

Furthermore, more specifically, the above-described configuration may be such that an area of the selected part is set in accordance with a number of pieces of the data belonging to one of the categories corresponding to the selected part. This configuration allows a user to intuitionally grasp a total number of pieces of data resulting from narrowing down.

Furthermore, more specifically, the above-described configuration may be such that an area of the selected part is set in accordance with a total of sizes of pieces of the data belonging to one of the categories corresponding to the selected part. This configuration allows a user to intuitionally grasp a total of sizes of pieces of data resulting from narrowing down.

Furthermore, more specifically, the above-described configuration may be such that the narrowing-down action is an action in which any one of the second objects is dragged away from the first object. This configuration allows a user to intuitionally perform the narrowing-down action.

Furthermore, more specifically, the above-described configuration may be such that as the processing function, a plurality of processing functions are provided, and icons corresponding respectively to the processing functions are displayed on the selection acceptance screen. Further, upon a predetermined processing command action involving a selection of any one of the second objects and a selection of any one of the icons being performed, a piece of the data belonging to one of the categories corresponding to the any one of the second objects and one of the processing functions corresponding to the any one of the icons are determined, and the piece of the data thus determined is processed by using the one of the processing functions thus determined.

Furthermore, more specifically, the above-described configuration may be such that the processing command action is an action including a first action in which any one of the second objects is selected and a second action in which, after the first action is performed, any one of the icons is selected, and the designation acceptance portion performs a selection prevention operation for preventing any of the icons corresponding to that one of the processing functions which is not used to process a piece of the data belonging to one of the categories corresponding to the any one of the second objects selected by the first action from being selected by the second action.

This configuration makes it easy for a user to perform the processing command action in an appropriate manner. Furthermore, more specifically, the above-described configuration may be such that the selection prevention operation is an operation in which any of the icons that is not to be selected by the second action is brought to a non-displayed state.

Furthermore, more specifically, the above-described configuration may be such that the processing command action is an action in which any one of the second objects is dragged to any one of the icons. This configuration allows a user to intuitionally perform the processing command action.

Furthermore, more specifically, the above-described configuration may be such that, with respect to each of the second objects, a number of times the each of the second objects has been selected by the narrowing-down action is counted in advance, and in accordance with the number of times thus counted, a display form of the each of the second objects is set to vary. This configuration allows a user to grasp which one of the second objects has a higher level of importance.

Furthermore, more specifically, the above-described configuration may be such that types of those ones of the second objects which are simultaneously displayed on the selection acceptance screen for a common tier are switched when a predetermined first switching action is performed. This configuration makes it easy to enhance ease of viewing of the selection acceptance screen.

Furthermore, more specifically, the above-described configuration may be such that, with respect to each of the second objects, a number of times the each of the second objects has been selected by the narrowing-down action is counted in advance, and based on the number of times thus counted, those ones of the second objects which are to be simultaneously displayed first on the selection acceptance screen for a common tier are decided. This configuration makes it possible to save, as much as possible, the trouble of performing the first switching action.

Furthermore, more specifically, the above-described configuration may be such that types of those ones of the icons which are simultaneously displayed on the selection acceptance screen for a common tier are switched when a predetermined second switching action is performed. This configuration makes it easy to enhance ease of viewing of the selection acceptance screen.

Furthermore, more specifically, the above-described configuration may be such that, with respect to each of the icons, a number of times the each of the icons has been selected by the data processing command action is counted in advance, and based on the number of times thus counted, those ones of the icons which are to be simultaneously displayed first on the selection acceptance screen for a common tier are decided. This configuration makes it possible to save, as much as possible, the trouble of performing the second switching action.

Furthermore, more specifically, the above-described configuration may be such that the selection acceptance screen includes a third object that is disposed around the first object and has a protruding portion protruding toward the first object, and upon a predetermined returning action involving a selection of the third object being performed, the data processing apparatus undoes narrowing down of the pieces of data by one stage, and causes the selection acceptance screen for an immediately upper tier to be displayed.

Furthermore, more specifically, the above-described configuration may be such that the returning action is an action in which the third object is dragged to a predetermined position. This configuration allows a user to intuitionally perform the returning action.

Furthermore, more specifically, the above-described configuration may be such that at least one of the processing functions is a function of processing a piece of the data by using preinstalled application software.

### DESCRIPTION OF DRAWINGS

The above-described and other objects and features of the present invention will be further clarified by referring to the following descriptions of preferred embodiments and the appended drawings in which:
Fig. 1 is a block diagram of a data processing apparatus according to an embodiment of the present invention;
Fig. 2 is an explanatory view related to types of categories in a first embodiment;
Fig. 3 is a flow chart related to an acceptance operation;
Fig. 4 is an explanatory view of a selection acceptance screen for an "Uppermost" tier;
Fig. 5 is an explanatory view of a selection acceptance screen for the "Uppermost" tier (when a narrowing-down action is executed);
Fig. 6 is an explanatory view of a selection acceptance screen for an "Address" tier;
Fig. 7 is an explanatory view of a selection acceptance screen for the "Address" tier (when a returning action is executed);
Fig. 8 is an explanatory view of a selection acceptance screen for the "Address" tier (when a processing command action is executed);
Fig. 9 is an explanatory view related to switching of category tags that are simultaneously displayed;
Fig. 10 is an explanatory view related to switching of icons that are simultaneously displayed;
Fig. 11 is an explanatory view related to types of categories in a fourth embodiment;
Fig. 12 is an explanatory view of a selection acceptance screen for an "Uppermost" tier;
Fig. 13 is an explanatory view of a selection acceptance screen for a "Program" tier;
Fig. 14 is an explanatory view of a selection acceptance screen for a "Drama" tier; and
Fig. 15 is an explanatory view of a selection acceptance screen for the "Drama" tier (when a processing command action is executed).

### DESCRIPTION OF PREFERRED EMBODIMENTS

Hereinafter, embodiments of the present invention will be described by way of first to fourth embodiments as examples.

### 1. First Embodiment

### [Configuration, etc. of Data Processing Apparatus]

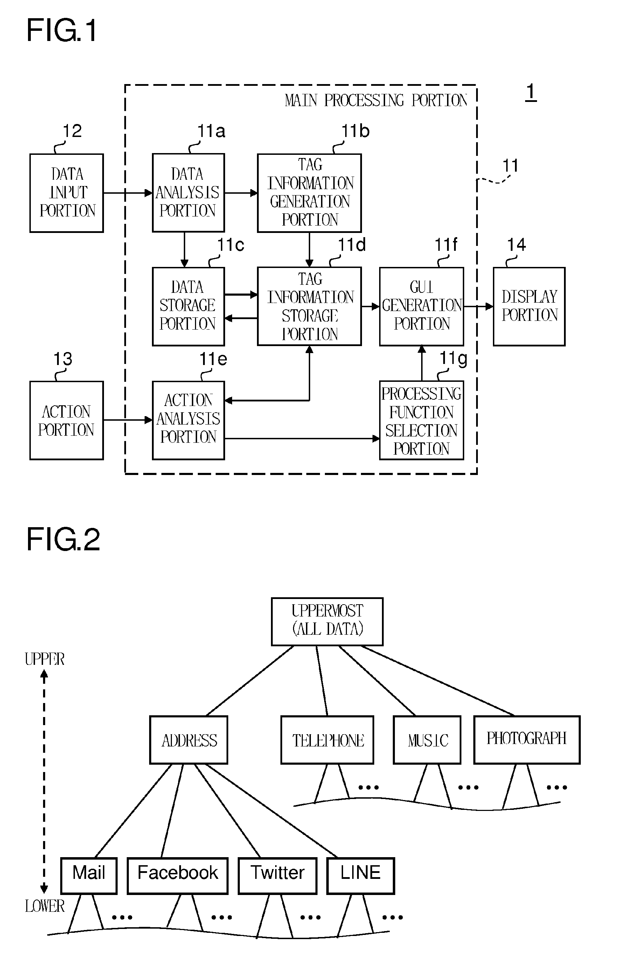

First, a description is given of a first embodiment. Fig. 1 is a block diagram showing a configuration of a data processing apparatus 1 according to this embodiment. It is assumed that the data processing apparatus 1 of the first embodiment is, as one example, an information terminal having a touch panel. The data processing apparatus 1 is configured to accept a user's action using the touch panel and is capable of performing data processing by using a plurality of types of preinstalled applications (one form of a processing function).

Furthermore, it is assumed the data processing apparatus 1 of the first embodiment has been installed with the plurality of types of applications including, as one example, Applications A to F. "Application A" is an application for mail (email) communication, "Application B" is an audio player application, and "Application C" is an application for telephone communication. Furthermore, "Application D" is an application for Facebook (registered trademark), "Application E" is an application for Twitter (registered trademark)", and "Application F" is an application for LINE.

As shown in Fig. 1, the data processing apparatus 1 includes a main processing portion 11, a data input portion 12, an action portion 13, and a display portion 14. The main processing portion 11 is a portion that executes main data processing in the data processing apparatus 1.

The data input portion 12 is a portion that accepts, at any time, an input of a piece of data to be processed by the data processing apparatus 1 (hereinafter, referred to simply as "a piece of data"). Pieces of data inputted to the data input portion 12 are each a piece of data to be processed by using any one of the applications that have been installed on the data processing apparatus 1.

The action portion 13 is a portion that accepts, at any time, a user's action. The action portion 13 in the first embodiment includes the earlier mentioned touch panel. The display portion 14 is a portion that displays various types of information. The display portion 14 in the first embodiment includes a display (for example, a liquid crystal display) that is provided at a surface thereof with the touch panel of the action portion 13.

Furthermore, the main processing portion 11 holds information on hierarchical tiers of categories for categorizing pieces of data. Fig. 2 shows types of the categories in an example according to the first embodiment. As shown in this figure, "Uppermost" (to which all pieces of data belong) represents an uppermost category, and as categories immediately lower than that, categories of "Address", "Telephone", "Music", and "Photograph" are provided.

The category of "Address" is a category to which pieces of data on addresses for mail or the like belong. Furthermore, the category of "Telephone" is a category to which pieces of data related to telephone communication belong. Furthermore, the category of "Music" is a category to which pieces of data related to music belong. Furthermore, the category of "Photograph" is a category to which pieces of data related to photographs belong.

Furthermore, as categories immediately lower than "Address", categories of "Mail", "Facebook", "Twitter", and "LINE" are provided. The category of "Mail" is a category to which pieces of data on addresses for mail belong. Furthermore, the category of "Facebook" is a category to which pieces of data on addresses for Facebook belong. Furthermore, the category of "Twitter" is a category to which pieces of data on addresses for Twitter belong. Furthermore, the category of "LINE" is a category to which pieces of data on addresses for LINE belong.

Such information on the categories may be preregistered in the data processing apparatus 1 or may be able to be freely set by a user. Furthermore, as for the types of the categories, for example, when a piece of data of a new category is inputted or when a new application is installed, an addition to the types may be made as required. In the following description, it is assumed that, unless otherwise specified, the term "tier" refers to any of the tiers by which pieces of data are categorized.

Furthermore, as shown in Fig. 1, the main processing portion 11 has a data analysis portion 11a, a tag information generation portion 11b, a data storage portion 11c, a tag information storage portion 11d, an action analysis portion 11e, a GUI generation portion 11f, a processing function selection portion 11g, and so on.

The data analysis portion 11a executes an analysis with respect to each piece of data inputted to the data input portion 12 so that it can be determined to which of the categories the each piece of data belongs. As a method for achieving the determination, various methods can be adopted. As one example, there can be adopted a method in which the determination is made based on an extension of a data name (file name), a method in which the determination is made based on a form of a piece of data (for example, a piece of data in the form of a photograph is determined to belong to the category of "Photograph"), a method in which the determination is made in accordance with a user's designation, or the like.

The data analysis portion 11a transmits information on an analysis result regarding each piece of data to the tag information generation portion 11b and transmits the each piece of data that has been analyzed to the data storage portion 11c. The data storage portion 11c is configured to store each piece of data received from the data analysis portion 11a.

The tag information generation portion 11b generates, based on information received from the data analysis portion 11a, tag information indicating to which of the categories each piece of data belongs. Thus, for example, in a case where a piece of data A that is a piece of data on an address for mail is inputted, as tag information, a piece of information indicating that the piece of data A belongs to the category of "Mail" (a piece of information that links the piece of data A to the category of "Mail") is generated.

The tag information generation portion 11b transmits the thus generated piece of tag information to the tag information storage portion 11d. The tag information storage portion 11d is configured to store each piece of tag information received from the tag information generation portion 11b.

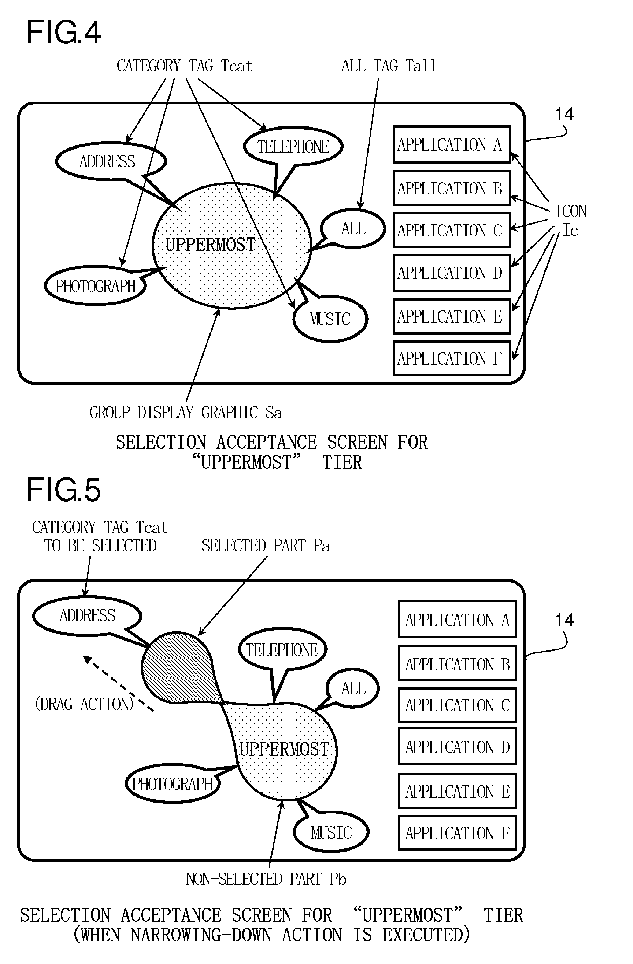

The action analysis portion 11e analyzes a user's action performed at the action portion 13 and recognizes what type of action has just been performed. The GUI generation portion 11f generates, based on, for example, the tag information stored in the tag information storage portion 11d, a piece of information on a GUI (graphical user interface). The thus generated piece of information on a GUI is transmitted to the display portion 14, where an image represented by the piece of information is displayed. The GUI includes an after-mentioned selection acceptance screen (see Fig. 4, etc.).

The processing function selection portion 11g causes icons of various processing functions (which, in a case of this embodiment, correspond to the various applications) to be displayed on the selection acceptance screen, thus enabling a selection among the applications by a user. The processing function selection portion 11g has a grasp of information on a piece of data of which of the categories is to be processed (a piece of data that can be processed) by using each of the applications, and decides, based on the information, types of icons to be displayed on the selection acceptance screen.

### [Acceptance Operation]

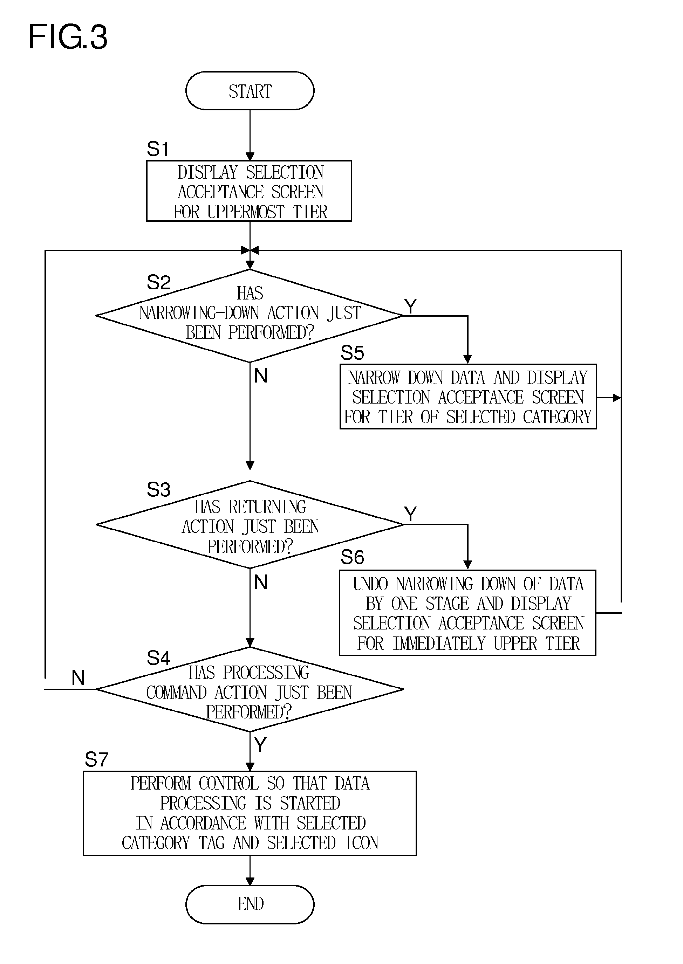

The data processing apparatus 1 accepts a designation of a desired piece of data and executes an acceptance operation intended for the thus designated piece of data to be processed by using a desired processing function. With reference to a flow chart shown in Fig. 3 and explanatory views of Figs. 4 to 8, the following describes a flow of this acceptance operation. The acceptance operation is continuously performed until an after-mentioned operation of Step S7 is performed. When, however, a predetermined cancel action or the like is performed while the acceptance operation is being executed, the acceptance operation is stopped at that point in time.

The data processing apparatus 1 first causes a selection acceptance screen for an "Uppermost" tier to be displayed on the display portion 14 (Step S1). The selection acceptance screen is a screen that accepts various types of selections and so on of pieces of data in a tier currently of interest (pieces of data resulting from narrowing down to ones each belonging to any category in the tier currently of interest). Fig. 4 exemplarily shows the selection acceptance screen for the "Uppermost" tier. As shown in this figure, the selection acceptance screen includes a group display graphic Sa, category tags Tcat, an ALL tag Tall, and icons Ic.

The group display graphic Sa is an object representing a group of pieces of data in the tier currently of interest and is a graphic having a predetermined area (which is oval-shaped in an example of Fig. 4). The category tags Tcat are objects corresponding respectively to categories in a tier immediately lower than the tier currently of interest and are each in the form of a tag representing a corresponding one of the categories (labeled with a name of the corresponding one of the categories in the example of Fig. 4). In the example of Fig. 4, the category tags Tcat of "Address", "Telephone", "Music", and "Photograph" are displayed.

The category tags Tcat may be arranged in descending order of importance (for example, frequency with which the category tags Tcat are selected by a user). The ALL tag Tall is an object signifying all pieces of data in the tier currently of interest and is in the form of a tag indicating as such (labeled "ALL" in the example of Fig. 4).

The category tags Tcat and the ALL tag Tall are disposed around the group display graphic Sa and each have a protruding portion protruding toward the group display graphic Sa. Furthermore, the category tags Tcat and the ALL tag Tall are disposed so as to make contact at a vicinity of a tip end of the protruding portion with the group display graphic Sa. Furthermore, the icons Ic correspond to various applications, respectively. In the example of Fig. 4, the icons Ic of "Application A" to "Application F" are displayed.

Referring back to Fig. 3, the data processing apparatus 1, while displaying the selection acceptance screen described above, places each of a narrowing-down action, a returning action, and a processing command action on standby (Steps S2 to S4).

The narrowing-down action (Step S2) is an action that involves a selection of any one of the category tags Tcat (namely, a selection among the categories) and is intended to narrow down pieces of data. Upon the narrowing-down action being performed (Y at Step S2), the data processing apparatus 1 narrows down the pieces of data in the tier currently of interest to ones belonging to the selected one of the categories, and causes a selection acceptance screen for a tier of the selected one of the categories to be displayed (Step S5). After that, the flow of the acceptance operation returns to the operation of Step S2.

Fig. 5 exemplarily shows a selection acceptance screen for the "Uppermost" tier when the narrowing-down action is executed. In an example of Fig. 5, a narrowing-down action involving a selection of the category tag Tcat of "Address" is being performed. Such a narrowing-down action is an action in which any one of the category tags Tcat (one of the category tags Tcat, which is to be selected) is dragged away from the group display graphic Sa. This allows a user to intuitionally perform the narrowing-down action. Such a drag action includes a drag-and-drop action and so on.

Upon the action described above being performed, as shown in Fig. 5, the group display graphic Sa is split into a selected part Pa and a non-selected part Pb. The selected part Pa is a part including a portion being in contact with one of the category tags Tcat selected by the narrowing-down action, and the non-selected part Pb is a part other than the selected part Pa. The selected part Pa represents a group of pieces of data belonging to the presently selected one of the categories (referred to as "selected pieces of data"), and the non-selected part Pb represents a group of pieces of data belonging to presently unselected ones of the categories (referred to as "non-selected pieces of data).

An area of the selected part Pa can be set by various methods. Examples of such a method include first and second methods described below.

The first method is a method in which an area of the selected part Pa is set in accordance with a total number of selected pieces of data (pieces of data belonging to a category corresponding to the selected part Pa). The first method is achieved by, for example, defining a ratio between an area of the selected part Pa and an area of the non-selected part Pb as a ratio between a total number of selected pieces of data and a total number of non-selected pieces of data.

The second method is a method in which an area of the selected part Pa is set in accordance with a total of sizes of selected pieces of data. The second method is achieved by, for example, defining the ratio between an area of the selected part Pa and an area of the non-selected part Pb as a ratio between a total of sizes of selected pieces of data and a total of sizes of non-selected pieces of data. Adopting either of these methods allows a user to intuitionally grasp a total number or a total of sizes of pieces of data resulting from narrowing down. A total number, a total of sizes, or the like of pieces of data resulting from narrowing down may be displayed to be shown to a user in any other manner.

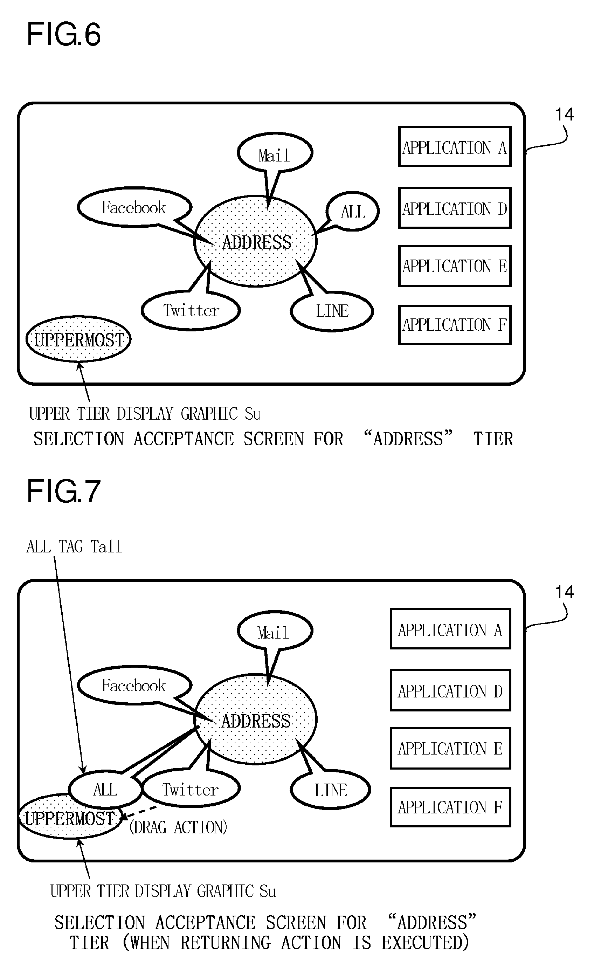

Furthermore, after the narrowing-down action in the example shown in Fig. 5 has been performed, a selection acceptance screen for an "Address" tier is displayed. Fig. 6 exemplarily shows the selection acceptance screen for the "Address" tier. The selection acceptance screen shown in Fig. 6 also includes, in addition to various components similar to those in the case shown in Fig. 4, an upper tier display graphic Su.

The upper tier display graphic Su is an object representing an immediately upper tier (in an example of Fig. 6, the "Uppermost" tier) as seen from a tier currently of interest. Selection acceptance screens for tiers other than the uppermost tier are so configured that the upper tier display graphic Su described above appears therein. As will be described later, the upper tier display graphic Su is used, for example, when the returning action is executed.

In the selection acceptance screen for the "Address" tier, compared with the selection acceptance screen for the "Uppermost" tier, displays of the icons Ic of "Application B" and "Application C" are omitted. This is because, at a current stage, displayed are pieces of data resulting from narrowing down to ones belonging to the category of "Address".

That is, the pieces of data at the current stage resulting from the narrowing down (pieces of data in the tier currently of interest) include no piece of data to be processed by using "Application B" (audio player application) and no piece of data to be processed by using "Application C" (application for telephone communication). Since there is, therefore, no possibility that "Application B" and "Application C" are used to process the pieces of data at the current stage resulting from the narrowing down, the icons Ic of "Application B" and "Application C" are set not to be displayed.

As described above, the data processing apparatus 1 decides, in accordance with pieces of data at a current stage resulting from narrowing down (that is, in accordance with a tier currently of interest), types of the icons Ic to be displayed on each of the selection acceptance screens for the respective tiers. Furthermore, the icons Ic may be arranged in descending order of relevance to the category tags Tcat being displayed.

Referring back to Fig. 3, the returning action (Step S3) is an action that involves a selection of the ALL tag Tall and is intended to undo (cancel) narrowing down of pieces of data by one stage. Upon the returning action being performed (Y at Step S3), the data processing apparatus 1 undoes narrowing down of pieces of data by one stage, and causes a selection acceptance screen for an immediately upper tier to be displayed (Step S6). After that, the flow of the acceptance operation returns to the operation of Step S2.

Fig. 7 exemplarily shows a selection acceptance screen for the "Address" tier when the returning action is executed. The returning action as shown herein is an action in which the ALL tag Tall is dragged to a position of the upper tier display graphic Su. This allows a user to intuitionally perform the returning action.

Upon the action described above being performed, narrowing down of pieces of data is undone by one stage, and a selection acceptance screen for an immediately upper tier is displayed again. Thus, a state of the data processing apparatus can be brought back to a state before an immediately previous stage of a narrowing-down action.

Referring back to Fig. 3, the processing command action (Step S4) is an action that involves a selection of any one of the category tags Tcat and a selection of any one of the icons Ic and is intended to issue a command for processing a desired piece of data by using a desired application.

Upon the processing command action being performed (Y at Step S4), the data processing apparatus 1 performs control so that data processing is started in accordance with a selected one of the category tags Tcat and a selected one of the icons Ic (Step S7). To describe this more specifically, the data processing apparatus 1 first determines a piece of data belonging to a category corresponding to the selected one of the category tags Tcat and an application corresponding to the selected one of the icons Ic. Then, the data processing apparatus 1 performs processing of the thus determined piece of data by using the thus determined application.

As one example, in a case where a piece of data on an address for mail and the Application A are determined, the data processing apparatus 1 starts up the Application A and then turns into a state of accepting creation of a mail message directed to the address represented by the piece of data. According to this example, it is possible for a user to send a mail message to a desired address simply by, for example, inputting text of the mail message without having to input the address.

In the processing command action, a configuration may be adopted in which in a case where the ALL tag Tall is selected instead of any one of the category tags Tcat, processing is performed on the assumption that all pieces of data in a tier currently of interest are determined. Furthermore, a configuration may be adopted in which in a case where pieces of data determined include ones to be processed by using an application determined and ones not to be processed by using the application determined, only the ones to be processed by using the application determined are extracted, and then processing with respect thereto is performed.

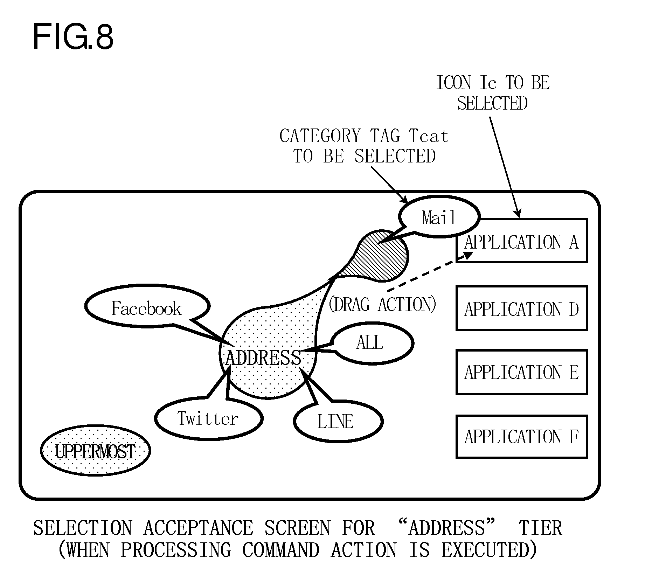

Fig. 8 exemplarily shows a selection acceptance screen for the "Address" tier when the processing command action is executed. The processing command action shown herein is an action in which any one of the category tags Tcat (one of the category tags Tcat, which is to be selected) is dragged to a position of any one of the icons Ic (one of the icons Ic, which to be selected). This allows a user to intuitionally perform the processing command action.

Furthermore, this processing command action, as seen in more detail, is an action including a first action in which any one of the category tags Tcat is selected and a second action in which, after the first action is performed, any one of the icons Ic is selected. The first action is, for example, an action of touching with a finger, one of the category tags Tcat, which is to be selected, and the second action is, for example, an action of, while keeping touching the one of the category tags Tcat, which is to be selected, moving the finger to a position of one of the icons Ic, which is to be selected.

In this case, the data processing apparatus 1 may be configured to perform an operation (selection prevention operation) for preventing any of the icons Ic corresponding to an application that is not used to process a piece of data belonging to a category corresponding to the any one of the category tags Tcat selected by the first action from being selected by the second action. For example, the data processing apparatus 1 may be configured to perform, as such a selection prevention operation, an operation in which any of the icons Ic that is not to be selected by the second action is brought to a non-displayed state.

In an example of Fig. 8, as the first action, the category Tcat of "Mail" is selected. Furthermore, "Application A" is used to process a piece of data belonging to the category of "Mail", whereas "Application D", "Application E", and "Application F" are not used to process a piece of data belonging to the category of "Mail". Based on this, a configuration may be adopted in which the above-described selection prevention operation is performed, whereby the icons Ic of "Application D", "Application E", and "Application F" are brought to a non-displayed state so as not to be selected by the second action. This makes it easy for a user to perform the process command action in an appropriate manner.

According to the acceptance operation described thus far, there is accepted a user's action designation as to which application is used to process which piece of data. A user can narrow down pieces of data by making a selection of a desired category in each tier of hierarchical tiers of categories in descending order of hierarchy and have pieces of data resulting from the narrowing down processed by using a desired application. This allows a user to perform a data-based action designation and not an application-based action designation.

In the data processing apparatus 1, there may be a case where, even when one category has the same name as that of another category (for example, these categories have a name "Family"), pieces of data belonging to the former are different from pieces of data belonging to the latter. As one example, there may be a case where, to the category of "Family" under the category of "Photograph", family-related pieces of data to be processed by using a photo viewer belong, and to the category of "Family" under the category of "Address", family-related pieces of data to be processed by using mail software belong.

### 2. Second Embodiment

Next, a description is given of a second embodiment. The second embodiment is different in terms of a selection acceptance screen from the first embodiment and, except for that, is basically similar to the first embodiment. The following description places an emphasis on the difference from the first embodiment and may omit a description in common with the first embodiment.

A data processing apparatus 1 of the second embodiment counts, in advance, with respect to each of category tags Tcat displayed on the selection acceptance screen, the number of times the each of category tags Tcat has been hitherto selected by a narrowing-down action (number of times of selection Na). It can be said that the larger the number of times of selection Na of any of the category tags Tcat, the greater the frequency with which a user tends to select the any of the category tags Tcat, i.e. the higher a level of importance of the any of the category tags Tcat.

Then, the data processing apparatus 1 sets, based on the number of times of selection Na, a display form of each of the category tags Tcat on the selection acceptance screen. For example, in accordance with the number of times of selection Na, the data processing apparatus 1 sets the display form (for example, a size, a shape, a color, or the like) of each of the category tags Tcat to vary. As a more specific example, the data processing apparatus 1 sets the display form so that the larger the number of times of selection Na of any of the category tags Tcat, the larger a size in which the any of the category tags Tcat is displayed on the selection acceptance screen. This allows a user to easily identify which one of the category tags Tcat has a high level of importance.

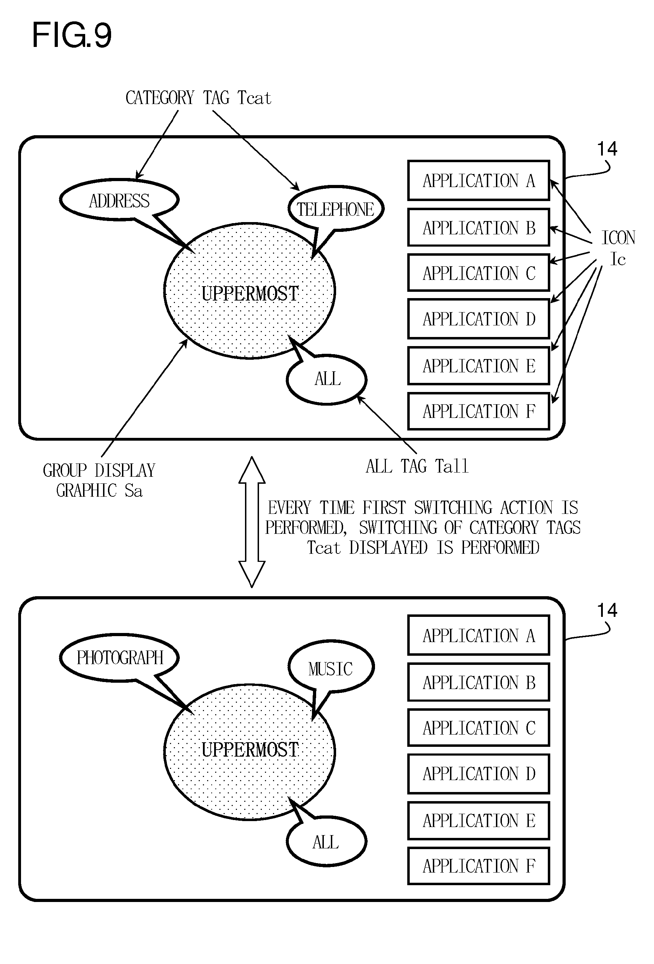

Furthermore, the data processing apparatus 1 may be configured so that those ones of the category tags Tcat which are simultaneously displayed on the selection acceptance screen for a common tier are switched when a predetermined first switching action is performed. The first switching action may be, for example, an action of tapping a group display graphic Sa. Fig. 9 shows one example of how such switching is performed.

According to the example of Fig. 9, every time the first switching action is performed, a state of a selection acceptance screen for an uppermost tier is switched between a state where the category tags Tcat of "Address" and "Telephone" are simultaneously displayed and a state where the category tags Tcat of "Photograph" and "Music" are simultaneously displayed. Thus, particularly in a case where the number of the category tags Tcat in a common tier is large, compared with a case where all the category tags Tcat are simultaneously displayed, ease of viewing of the selection acceptance screen can be enhanced.

Furthermore, in a case where such switching is performed, those ones of the category tags Tcat which are to be simultaneously displayed first on the selection acceptance screen for a common tier may be decided based on the above-mentioned number of times of selection Na. For example, any of the category tags Tcat, whose number of times of selection Na is relatively large (i.e. whose level of importance is relatively high), is set to be displayed first, and thus it becomes possible to save, as much as possible, the trouble of performing the first switching action.

### 3. Third Embodiment

Next, a description is given of a third embodiment. The third embodiment is different in terms of a selection acceptance screen from the first embodiment and, except for that, is basically similar to the first embodiment. The following description places an emphasis on the difference from the first embodiment and may omit a description in common with the first embodiment.

A data processing apparatus 1 of the third embodiment counts, in advance, with respect to each of icons Ic displayed on the selection acceptance screen, the number of times the each of icons Ic has been hitherto selected by a processing command action (number of times of selection Nb). It can be said that the larger the number of times of selection Nb of any of the icons Ic, the greater the frequency with which a user tends to select the any of the icons Ic, i.e. the higher a level of importance of the any of the icons Ic.

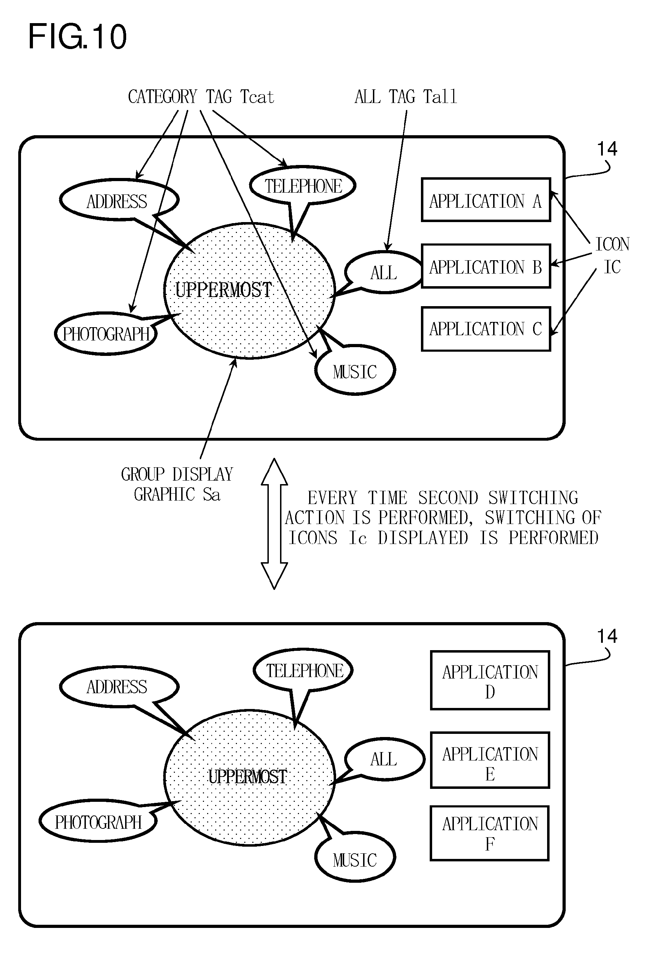

The data processing apparatus 1 may be configured so that those ones of the icons Ic which are simultaneously displayed on the selection acceptance screen for a common tier are switched when a predetermined second switching action is performed. Fig. 10 shows one example of how such switching is performed.

According to the example of Fig. 10, every time the second switching action is performed, a state of a selection acceptance screen for an uppermost tier is switched between a state where the icons Ic of "Application A" to "Application C" are simultaneously displayed and a state where the icons Ic of "Application D" to "Application F" are simultaneously displayed. Thus, particularly in a case where the number of the icons Ic in a common tier is large, compared with a case where all the icons Ic are simultaneously displayed, ease of viewing of the selection acceptance screen can be enhanced.

Furthermore, in a case where such switching is performed, those ones of the icons Ic which are to be simultaneously displayed first on the selection acceptance screen for a common tier may be decided based on the above-mentioned number of times of selection Nb. For example, any of the icons Ic, whose number of times of selection Nb is relatively large (i.e. whose level of importance is relatively high), is set to be displayed first, and thus it becomes possible to save, as much as possible, the trouble of performing the second switching action.

### 4. Fourth Embodiment

Next, a description is given of a fourth embodiment. The following description places an emphasis on a difference from the first embodiment and may omit a description in common with the first embodiment.

It is assumed that a data processing apparatus 1 of the fourth embodiment is a television broadcast receiver having a recording function. The data processing apparatus 1 is capable of performing data processing by using, in addition to various applications that have been installed thereon, processing functions (a viewing function, a recording function, a transfer function, and so on) the data processing apparatus 1 inherently has. The viewing function is a function of enabling viewing of contents of a television program (a function of displaying a video image and outputting audio). The recording function is a function of recording (or being programmed to record) contents of a television program. The transfer function is a function of transferring data related to a television program.

Furthermore, pieces of data inputted to the data input portion 12 include a piece of data on contents of a television program on each channel and a piece of data on EPG (electronic program guide). Furthermore, the main processing portion 11 is capable of determining, based on the piece of data on EPG, a broadcast date and time, a broadcast channel, a title, and a genre of each television program, and other matters attendant thereon (such as characters appearing therein and whether or not the each television program features a latest episode).

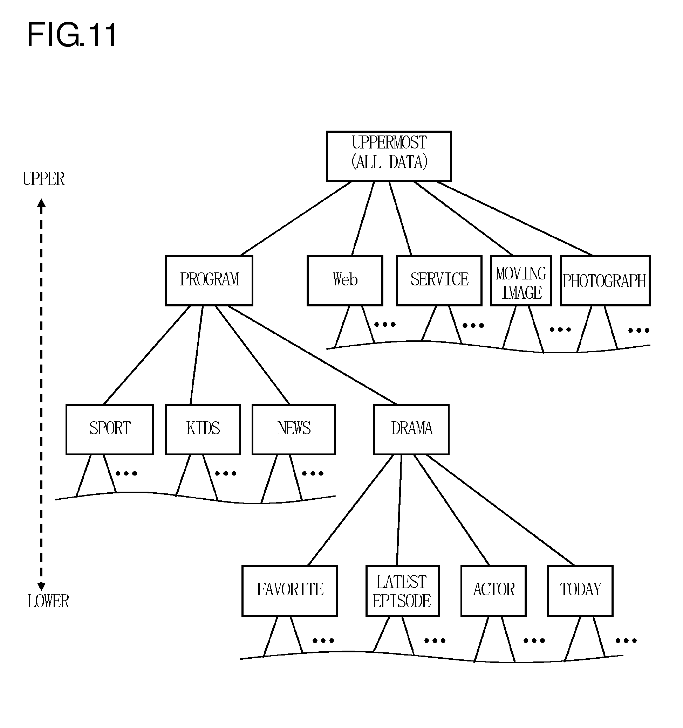

Furthermore, the main processing portion 11 holds information on hierarchical tiers of categories related to pieces of data. Fig. 11 shows types of the categories in an example according to the fourth embodiment. As shown in this figure, "Uppermost" (to which all pieces of data belong) is an uppermost category, and as categories immediately lower than that, categories of "Program", "Web", "Service", "Moving Image", and "Photograph" are provided.

The category of "Program" is a category to which pieces of data on television programs belong. Furthermore, the category of "Web" is a category to which pieces of data related to the Web belong. Furthermore, the category of "Service" is a category to which pieces of data related to predetermined services belong. Furthermore, the category of "Moving Image" is a category to which pieces of data related to moving images belong. Furthermore, the category of "Photograph" is a category to which pieces of data related to photographs belong.

Furthermore, as categories immediately lower than "Program", categories of "Sport", "Kids", "News", and "Drama" are provided. The category of "Sport" is a category to which pieces of data on sports programs belong. The category of "Kids" is a category to which pieces of data on kids' programs belong. The category of "News" is a category to which pieces of data on news programs belong. The category of "Drama" is a category to which pieces of data on drama programs belong.

Furthermore, as categories immediately lower than "Drama", categories of "Favorite", "Latest Episode", "Actor", and "Today" are provided. The category of "Favorite" is a category to which, among pieces of data on drama programs, ones satisfying conditions for being selected as a "Favorite" drama, which are preset by a user, belong. The category of "Latest Episode" is a category to which pieces of data on drama programs featuring their respective latest episodes belong. The category of "Actor" is a category to which pieces of data on drama programs in which a certain actor appears belong. The category of "Today" is a category to which pieces of data on drama programs scheduled to be broadcast today belong.

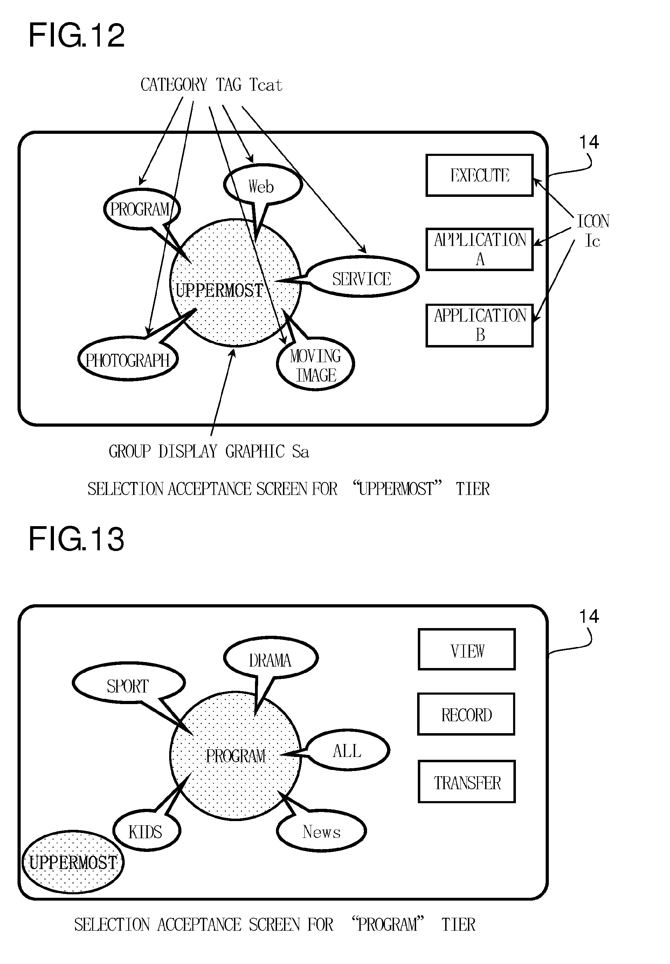

Fig. 12 exemplarily shows a selection acceptance screen for an "Uppermost" tier. As shown in this figure, similarly to the case of the first embodiment or the like, the selection acceptance screen includes a group display graphic Sa, category tags Tcat, and icons Ic. In a case where, when this selection acceptance screen is being displayed, a narrowing-down action involving a selection of, for example, the category tag Tcat of "Program" is performed, pieces of data are narrowed down to ones belonging to the category of "Program", and then a selection acceptance screen for a "Program" tier exemplarily shown in Fig. 13 is displayed.

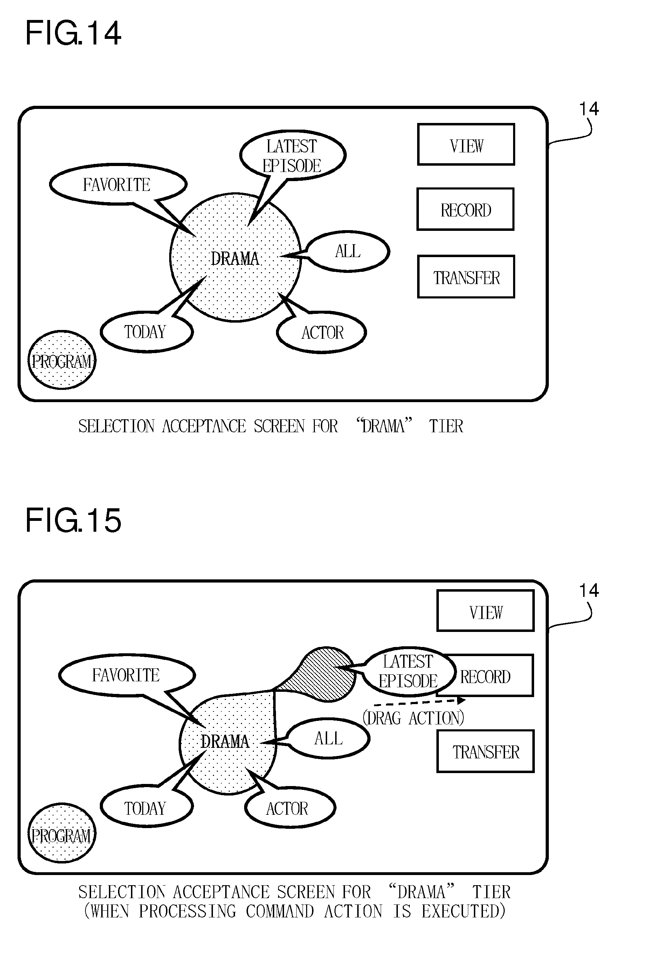

Then, in a case where, when this selection acceptance screen is being displayed, a narrowing-down action involving a selection of, for example, the category tag Tcat of "Drama" further is performed, the pieces of data are narrowed down to ones belonging to the category of "Drama", and then a selection acceptance screen for a "Drama" tier exemplarily shown in Fig. 14 is displayed. Furthermore, in a case where, when this selection acceptance screen is being displayed, as shown in Fig. 15, a processing command action involving a selection of the category tag Tcat of "Latest Episode" and a selection of the icon Ic of "Record" is performed, the data processing apparatus 1 performs processing of a piece of data on a drama program featuring a latest episode by using the recording function.

As mentioned above, the various processing functions possessed by the data processing apparatus 1 of the fourth embodiment include not only the applications that have been installed on the data processing apparatus 1 but also the processing functions the data processing apparatus 1 inherently has. The data processing apparatus 1 of the fourth embodiment is configured to handle, in an acceptance operation, the applications equally to the processing functions it inherently has, and vice versa. This allows a user to have a desired piece of data processed without concern as to whether or not the processing function used is an application.

### 5. Others

The data processing apparatus 1 of each of the embodiments has various processing functions for processing data, and includes a function portion (storage portion) that stores pieces of data to be processed by using any one of these processing functions. Furthermore, the data processing apparatus 1 includes a function portion (category determination portion) that determines to which of hierarchical tiers of categories each of the pieces of data belongs. Furthermore, the data processing apparatus 1 includes a function portion (designation acceptance portion) that, every time it accepts a designation of one of the categories in each of the hierarchical tiers, which is made in descending order of hierarchy, narrows down the pieces of data to ones belonging to the thus designated category.

The designation acceptance portion causes a selection acceptance screen for each of the tiers to be displayed, which includes the group display graphic Sa representing a group of pieces of data in a tier currently of interest and the category tags Tcat corresponding respectively to those ones of the categories which are in an immediately lower tier. Furthermore, upon a narrowing-down action involving a selection of any one of the category tags Tcat being performed, the designation acceptance portion accepts a designation of one of the categories corresponding to the any one of the category tags Tcat. In addition, the category tags Tcat are disposed around the group display graphic Sa and each have a protruding portion protruding toward the group display graphic Sa.

Thus, according to the data processing apparatus 1, a user can easily designate a desired piece of data. That is, the category tags Tcat being in the above-mentioned form allows a user to intuitionally grasp details of the selection acceptance screen (such as that the category tags Tcat represent categories for categorizing pieces of data included in the group display graphic Sa) and to easily designate a desired piece of data. Furthermore, the category tags Tcat are disposed so as to make contact at the above-described protruding portion with the group display graphic Sa. This allows a user to more intuitionally grasp details of the selection acceptance screen.

Specific forms of the various types of actions (the narrowing-down action, the returning action, the processing command action, and so on) performed while the acceptance operation is being executed are not particularly limited as long as the data processing apparatus can recognize an intended purpose of each of the actions. For example, these actions may be performed in the form of, instead of a touch action with a finger or the like, an action using a mouse or an action using a voice, a gesture, or the like. For example, the data processing apparatus 1 may be configured so that, when a user utters "Address" while the selection acceptance screen is being displayed, it recognizes that a narrowing-down action involving a selection of the category tag Tcat of "Address" has just been performed.

Also in this case, as has been already described, the group display graphic Sa is split into the selected part Pa and the non-selected part Pb (see Fig. 5). Since details to be uttered are displayed in advance on the selection acceptance screen, a user can perform any action in an appropriate manner without having to remember a new action command.

In addition to the foregoing embodiments, the present invention can be variously modified in configuration within the spirit of the invention. That is, the foregoing embodiments are to be construed in all respects as illustrative and not limiting. The technical scope of the present invention is indicated by the appended claims rather than by the descriptions of the foregoing embodiments, and it is to be understood that all changes that come within the meaning and range of equivalency of the claims are intended to be embraced therein.

Furthermore, unless any technical conflict arises, any combination is possible among the above-mentioned techniques of the embodiments. For example, the technique of the third embodiment can be combined with the technique of the second embodiment, and the technique of the fourth embodiment can be combined with the technique of the second or third embodiment. Furthermore, the data processing apparatus according to the present invention allows a user to easily designate a desired piece of data.

## Claims

1. A data processing apparatus having a processing function for processing data, comprising:
a storage portion that stores pieces of data to be processed by using the processing function;
a category determination portion that determines to which of predetermined hierarchical tiers of categories each of the pieces of data belongs; and
a designation acceptance portion that, every time it accepts a designation of one of the categories in each of the hierarchical tiers, which is made in descending order of hierarchy, narrows down the pieces of data to ones belonging to the one of the categories thus designated,
wherein
the designation acceptance portion causes a selection acceptance screen for each of the tiers to be displayed, which includes a first object representing a group of pieces of the data in a tier currently of interest and second objects corresponding respectively to those ones of the categories which are in an immediately lower tier,
upon a predetermined narrowing-down action involving a selection of any one of the second objects being performed, the designation acceptance portion accepts a designation of one of the categories corresponding to the any one of the second objects, and
the second objects are disposed around the first object and each have a protruding portion protruding toward the first object.

2. The data processing apparatus according to claim 1, wherein
the second objects are disposed so as to make contact at the protruding portion with the first object.

3. The data processing apparatus according to claim 2, wherein
upon the narrowing-down action being performed, the first object is split into a selected part including a portion being in contact with the any one of the second objects selected by the narrowing-down action and a non-selected part other than the selected part.

4. The data processing apparatus according to claim 3, wherein
an area of the selected part is set in accordance with a number of pieces of the data belonging to one of the categories corresponding to the selected part.

5. The data processing apparatus according to claim 3, wherein
an area of the selected part is set in accordance with a total of sizes of pieces of the data belonging to one of the categories corresponding to the selected part.

6. The data processing apparatus according to any one of claims 3 to 5, wherein
the narrowing-down action is an action in which any one of the second objects is dragged away from the first object.

7. The data processing apparatus according to any one of claims 1 to 6, wherein
as the processing function, a plurality of processing functions are provided,
icons corresponding respectively to the processing functions are displayed on the selection acceptance screen,
upon a predetermined processing command action involving a selection of any one of the second objects and a selection of any one of the icons being performed, a piece of the data belonging to one of the categories corresponding to the any one of the second objects and one of the processing functions corresponding to the any one of the icons are determined, and
the piece of the data thus determined is processed by using the one of the processing functions thus determined.

8. The data processing apparatus according to claim 7, wherein
the processing command action is an action including a first action in which any one of the second objects is selected and a second action in which, after the first action is performed, any one of the icons is selected, and
the designation acceptance portion performs a selection prevention operation for preventing any of the icons corresponding to that one of the processing functions which is not used to process a piece of the data belonging to one of the categories corresponding to the any one of the second objects selected by the first action from being selected by the second action.

9. The data processing apparatus according to claim 8, wherein
the selection prevention operation is an operation in which any of the icons that is not to be selected by the second action is brought to a non-displayed state.

10. The data processing apparatus according to any one of claims 7 to 9, wherein
the processing command action is an action in which any one of the second objects is dragged to any one of the icons.

11. The data processing apparatus according to any one of claims 1 to 10, wherein
with respect to each of the second objects, a number of times the each of the second objects has been selected by the narrowing-down action is counted in advance, and in accordance with the number of times thus counted, a display form of the each of the second objects is set to vary.

12. The data processing apparatus according to any one of claims 1 to 10, wherein
types of those ones of the second objects which are simultaneously displayed on the selection acceptance screen for a common tier are switched when a predetermined first switching action is performed.

13. The data processing apparatus according to claim 12, wherein
with respect to each of the second objects, a number of times the each of the second objects has been selected by the narrowing-down action is counted in advance, and based on the number of times thus counted, those ones of the second objects which are to be simultaneously displayed first on the selection acceptance screen for a common tier are decided.

14. The data processing apparatus according to any one of claims 7 to 10, wherein
types of those ones of the icons which are simultaneously displayed on the selection acceptance screen for a common tier are switched when a predetermined second switching action is performed.

15. The data processing apparatus according to claim 14, wherein
with respect to each of the icons, a number of times the each of the icons has been selected by the processing command action is counted in advance, and based on the number of times thus counted, those ones of the icons which are to be simultaneously displayed first on the selection acceptance screen for a common tier are decided.
